# EUROPEAN PATENT APPLICATION

(11) **EP 3 261 035 A1**
(43) Date of publication of application: **27.12.2017**
(21) Application number: 17176320.4
(22) Date of filing: 16.06.2017
(51) Int. Cl.: G06Q 20/04, G06F 17/00

(54) **RECEIPT PRINTER AND PROGRAM FOR CONTROL THEREOF**

(30) Priority: 20.06.2016 JP 2016121806
(71) Applicant: Toshiba TEC Kabushiki Kaisha, Tokyo 141-8562 (JP)
(72) Inventor: IWAMOTO, Jun, Shinagawa-ku, Tokyo 141-8562 (JP)
(74) Representative: Takeuchi, Maya

(57) **Abstract**

A receipt printing apparatus comprises a printer including a processor and a printing unit that is capable of printing on a printing medium. A registration device is connected to the printer. The printer stores a control program that when implemented by the processor causes the printer to acquire transaction details from the registration device, to receive a selection of a first output receipt type and a second output receipt type, and to output the transaction details in the selected one of the first output receipt type and the second output receipt type.

## Description

### FIELD

The present invention relates to receipt providing technologies in general, and embodiments described herein relate in particular to a receipt printer and a program for control thereof.

### BACKGROUND

An electronic receipt for a transaction can be sent to the customer via e-mail, an app, or a website. The customer may retrieve, view, and manage these receipts along with related product promotions, savings summaries, and other targeted messages from an arbitrary information terminal via an electronic receipt server.

However, existing electronic receipt management systems using an electronic receipt server that provide customized content generally require large-scale investment in equipment to provide a high-performance electronic receipt service.

It would desirable to provide a simple configuration for an electronic receipt service. To this end, there is provided a receipt printing apparatus, comprising:
a printer including a processor and a printing unit that is capable of printing on a printing medium; and
a registration device connected to the printer, wherein
the printer stores a control program that when implemented by the processor causes the printer to:
acquire transaction details from the registration device;
receive a selection of a first output receipt type and a second output receipt type; and
output the transaction details in the selected one of the first output receipt type and the second output receipt type.

Preferably, the first output receipt type is a printed receipt, and the second output receipt type is an electronic receipt.

Preferably still, the selection is provided by one of an external information terminals, a button operation on the printer, or a default setting of in the control program implemented when no specific selection is received from the external information terminal or the button operation.

Preferably yet, the receipt printing apparatus further comprises:
a first wireless communication unit that is capable of wirelessly receiving identification information from one of external information terminals and transmitting the electronic receipt to the external information terminal using a first wireless communication protocol.

Suitably, the receipt printing apparatus further comprises:
a second wireless communication unit that is capable of wirelessly receiving identification information from the external information terminal and transmitting the electronic receipt to the external information terminal using a second wireless communication protocol that is different than the first wireless communication protocol.

Suitably still, the first wireless communication protocol is a near field communication method.

Suitably yet, the identification information received from the external information terminal includes a user specification for a format of the electronic receipt, and
the electronic receipt is output in the format according to the user specification.

In the above receipt printing apparatus, the control program preferably further causes:
the electronic receipt to include additional information according to the identification information.

Also, in the above receipt printing apparatus, the additional information preferably includes a moving image.

Further, in the above receipt printing apparatus the printing unit is preferably one of a thermal printing unit, an inkjet printing unit, and a dot impact printing unit, and
the registration device is a point-of-sale terminal.

The invention also relates to a receipt printer for a point-of-sale terminal, the receipt printer comprising:
a processor and a memory unit;
a printer unit capable of printing paper a receipt including transactions details supplied by a point-of-sale terminal;
a near-field communication unit capable of wirelessly transmitting information to an external information terminal and wirelessly receiving information from the external information terminal, wherein the memory unit stores a control program that, when implemented by the processor, causes:
   an acquisition of transaction details from the point-of-sale terminal via a communication interface connected to the point-of-sale terminal,
   a waiting for a selection of a receipt output type for a predetermined time period, and
   an output of the transaction details as one of a printed receipt, printed by the printing unit, and an electronic receipt, wirelessly transmitted to the external information terminal, according to the selection of the receipt output type.

Preferably, the receipt printer further comprises:
a wireless communication unit, wherein
the electronic receipt is transmitted to the external information terminal via the wireless communication unit.

Preferably still, the receipt printer further comprises:
an operation panel for providing the selection of the receipt output type.

Preferably yet, the information transmitted from the external information terminal includes a user-selected format for the electronic receipt and user-specific information of a user associated with the external information terminal, and the program, when implemented by the processor, further causes:
the electronic receipt to be output in the user-selected format, and
the electronic receipt to include additional information according to the user-specific information.

The invention further relates to a non-transitory computer readable medium storing a control program that, when implemented by a processor in a receipt printer, causes:
an acquisition of transaction details from a point-of-sale terminal via a communication interface of the receipt printer connected to the point-of-sale terminal;
a waiting for a selection of a receipt output type for a predetermined time period; and
an output of the transaction details as one of a printed receipt, printed by a printing unit of the receipt printer, and an electronic receipt, transmitted to an external information terminal, according to the selection of the receipt output type.

Preferably, the electronic receipt is transmitted to the external information terminal via a wireless communication unit of the receipt printer.

Preferably still, the control program further causes:
the electronic receipt to be output in a user-selected format if information received from the external information terminal includes the user-selected format.

In the above non-transitory computer readable medium the selection of the receipt output type preferably occurs by the elapse the predetermined time.

Alternatively, in the above non-transitory computer readable medium the selection of the receipt output type preferably occurs by an operation of a button on the receipt printer.

Typically, the selection of the receipt output type is made by near field communication between the external information terminal and the receipt printer.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a perspective diagram illustrating a configuration of an accounting system to which a receipt printer according to an embodiment is applied.
Fig. 2 is a block diagram illustrating a schematic circuit configuration of a receipt printer.
Fig. 3 is a block diagram illustrating a schematic circuit configuration of an information terminal.
Fig. 4 is a flowchart of control processing by a central processor unit (CPU) that is included in a receipt printer.
Fig. 5 is a flowchart of control processing by a CPU that is included in an information terminal.

### DETAILED DESCRIPTION

According to one embodiment, a receipt printing apparatus comprises a printer including a processor and a printing unit that is capable of printing on a printing medium. A registration device is connected to the printer. The printer stores a control program that when implemented by the processor causes the printer to acquire transaction details from the registration device, to receive a selection of a first output receipt type and a second output receipt type, and to output the transaction details in the selected one of the first output receipt type and the second output receipt type.

A specific embodiment will be described below with reference to the drawings, using an example of an accounting system into which a receipt printer is incorporated. This example is used for the purposes of illustrations only. Accordingly, the scope of the invention should not be considered limited to those specific applications.

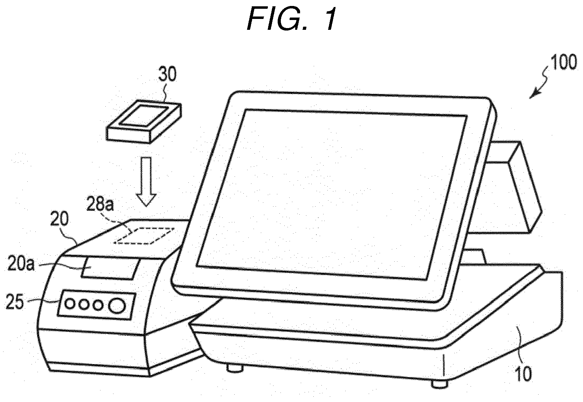

Fig. 1 is a perspective view illustrating a configuration of an accounting system 100.

The accounting system 100 includes a registration device 10, a receipt printer 20, and an information terminal 30.

The registration device 10 registers details of a customer transaction. The transaction is typically a sale of merchandise. A point-of-sale (POS) terminal is typically used as the registration device 10. The registration device 10 requests the receipt printer 20 to issue a receipt on which the details of the transaction are shown. The receipt printer 20 can print a paper receipt according to the request from the registration device 10 or wirelessly transmit electronic receipt data (also referred to as "an electronic receipt") including transaction details to the information terminal 30. The receipt printer 20 includes an outlet 20a, an operation panel 25, and antenna 28a, which will be described below. The information terminal 30 receives the electronic receipt wirelessly transmitted by the receipt printer 20 and also manages the electronic receipt. The information terminal 30 is typically a mobile device (e.g., a laptop computer, a smart phone, a tablet computer, or other mobile device). However, the information terminal 30 may be any other type of computing device.

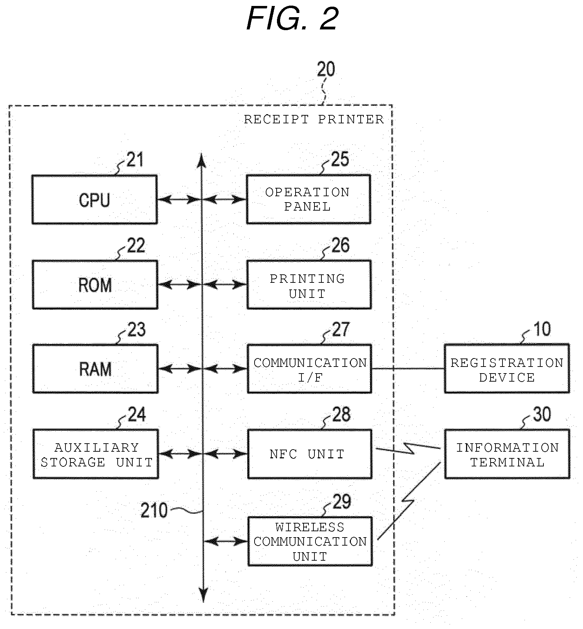

Fig. 2 is a block diagram illustrating a schematic circuit configuration of the receipt printer 20.

The receipt printer 20 includes a central processing unit (CPU) 21, a read-only memory (ROM) 22, a random-access memory (RAM) 23, an auxiliary storage unit 24, an operation panel 25, a printing unit 26, a communication interface (communication I/F) 27, a nearfield communication (NFC) unit 28, a wireless communication unit 29, and a bus 210.

The CPU 21, the ROM 22, the RAM 23, and the auxiliary storage unit 24 are connected by the bus 210 to one another in the receipt printer 20, and constitutes a computer that controls the receipt printer 20.

The CPU 21 corresponds to a central processor part of the computer. The CPU 21 controls each element of the receipt printer 20 so as to realize various operations by the receipt printer 20, based on an operating system, middleware, and an application program, which can be stored in the ROM 22 and the RAM 23.

The ROM 22 stores the operating system. In some cases, the ROM 22 stores the middleware or the application program. In some cases, the ROM 22 stores data that the CPU 21 refers to while performing various types of processing.

The RAM 23 stores data that the CPU 21 refers to while performing various types of processing. Additionally, the RAM 23 stores data that the CPU 21 temporarily uses while performing various types of processing, and the RAM 23 is used as a so-called work area.

The auxiliary storage unit 24 corresponds to an auxiliary storage part of the computer. As the auxiliary storage unit 24, an electrically erasable programmable read-only memory (EEPROM), a hard disk drive, a solid state drive (SSD), or the like can be used. The auxiliary storage unit 24 retains data that the CPU 21 uses while performing various types of processing, or data that is generated by the processing by the CPU 21. In some cases, the middleware or the application program is stored in the auxiliary storage unit 24. In one or more embodiments, the auxiliary storage unit 24 may not be included in the receipt printer 20.

The operation panel 25is included on a front surface of the receipt printer 20, for example, as illustrated in FIG. 1. The operation panel 25 includes an operation button for operating the receipt printer 20 and a display device for displaying an operation state of the receipt printer 20.

The printing unit 26 prints an arbitrary string of characters on receipt paper (a printing medium). The printing unit 26 may have a conventional printer configuration, including a thermal-type printing head and a transportation mechanism that transports the receipt paper. The printing unit 26 prints the details of the transaction on a sheet of receipt paper and discharges this sheet out of the receipt printer 20 from the outlet 20a that is illustrated in FIG. 1. The printing heads in the printing unit 26 may be any other type of printing heads, such as a dot-impact type head and an inkjet type head. The printing unit 26 corresponds to a printing mechanism that prints images and/or characters on a printing medium.

The communication interface 27 allows transmission and reception of data between the registration device 10 and the CPU 21. As the communication interface 27, for example, a conventional device in compliance with a specification, such as a universal serial bus (USB) or a RS-232C can be used.

The NFC unit 28 includes the antenna 28a that is positioned facing an upper surface of the receipt printer 20 as illustrated Fig. 1. The NFC unit 28 performs wireless communication in compliance with an NFC communication method between the receipt printer 20 and the information terminal 30 that is located close to the antenna 28a.

The wireless communication unit 29 performs wireless communication between the receipt printer 20 itself and the information terminal 30. As the wireless communication unit 29, for example, a conventional communication device in compliance with Wi-Fi or Bluetooth® can be used.

The bus 210 connects the CPU 21, the ROM 22, the RAM 23, the auxiliary storage unit 24, the operation panel 25, the printing unit 26, and the communication interface 27, and the NFC unit 28 with one another.

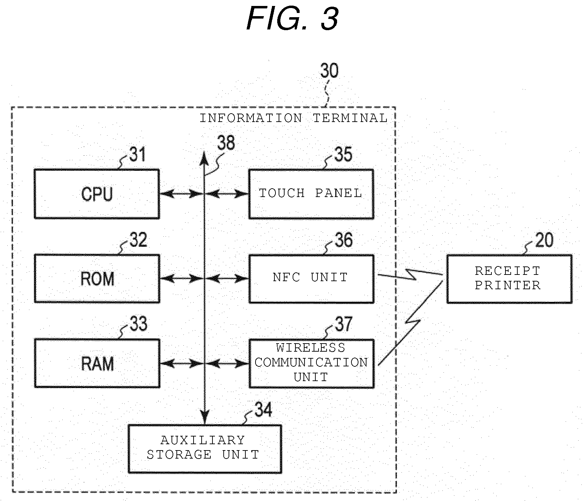

Fig. 3 is a block diagram illustrating a schematic circuit configuration of the information terminal 30.

The information terminal 30 includes a CPU 31, a ROM 32, the RAM 33, an auxiliary storage unit 34, a touch panel 35, an NFC unit 36, a wireless communication unit 37 and a bus 38.

In the information terminal 30, the CPU 31, the ROM 32, the RAM 33, and the auxiliary storage unit 34 are connected to one another through the bus 38, thereby, configuring a computer which controls the information terminal 30.

The CPU 31 corresponds to a central processor part of the computer. The CPU 31 controls each element of the information terminal 30 so as to realize various operations by the information terminal 30, based on an operating system, middleware, and an application program, which can be stored in the ROM 32 and the RAM 33.

The ROM 32 stores the operating system. In some cases, the ROM 32 stores the middleware or the application program. In some cases, the ROM 32 stores data that the CPU 31 refers to while performing various types of processing.

The RAM 33 stores data that the CPU 31 refers to while performing various types of processing. Additionally, the RAM 33 stores data that the CPU 31 temporarily uses while performing various types of processing, and the RAM 33 is used as a so-called work area. One portion of a storage area of the RAM 33 is used to store a list of on the sold merchandise for the transaction registered by the registration device 10.

The auxiliary storage unit 34 corresponds to an auxiliary storage part of the computer. As the auxiliary storage unit 34 is, for example, an EEPROM, a hard disk drive, a SSD, or the like can be used. The auxiliary storage unit 34retains data that the CPU 31 uses while performing various types of processing, or data that is generated by the processing by the CPU 31. In some cases, the middleware or the application program is stored in the auxiliary storage unit 34. In some cases, identification information, including user information and designation information, can be specified by a predetermined operation on the information terminal 30, and also stored in the auxiliary storage unit 34. The user information may include information about a user of the information terminal 30, such as a birthday. The designation information is information designating a data format for receipt data. Data formats that can be designated by the designation information include various formats, such as text formats, such as Extensible Markup Language (XML), Hypertext Markup Language (HTML), JavaScript® Object Notation (JSON), comma-separated values (CSV), and tab-separated values (TSV), image formats, such as Microsoft® Windows® bitmap image (BMP), Joint Photographic Experts Group (JPEG), Graphics Interchange Format (GIF), and Portable Network Graphics (PNG), and Portable Document Format (PDF). The user information and the designation information can be specified in advance by the user of the information terminal 30, or the like.

In this example, the CPU 31, the ROM 32, the RAM 33, and the auxiliary storage unit 34 constitute a computer.

The application program that is stored in the ROM 32 or the auxiliary storage unit 34 includes a control program which will be described below. In general, the information terminal 30 is delivered to a user in without the control program being already stored in the ROM 32 or the auxiliary storage unit 34. In this case, the control program may be stored in a removable storage medium and separately delivered to the user, or delivered via a network. Subsequent to the delivery of the control program, the user or the like may have write the control program written to the auxiliary storage unit 34. However, the information terminal 30 may also be delivered to the user with the control program already stored in the ROM 32 or the auxiliary storage unit 34. In this case, as the removable storage medium, a magnetic disk, a magnetic optical disk, an optical disk, a semiconductor memory, or the like can be used. A pattern match database 34b is typically set up in the auxiliary storage unit 34 as a part of an operation of writing the control program to the auxiliary storage unit 34. However, the pattern match database 34b may be set up at an arbitrary time. Furthermore, the pattern match database 34b may be updated after the initial setup is completed. In this case, required update may be provided on a removable recording medium or through a network.

The touch panel 35 functions as an input device and a display device of the information terminal 30.

When the information terminal 30 approaches the antenna 28a, as indicated by an arrow in Fig. 1, the NFC unit 36 performs wireless communication, in compliance with a NFC scheme, between NFC unit 36 (information terminal 30) and NFC unit 28 (receipt printer 20).

The wireless communication unit 37 performs wireless communication between the wireless communication unit 37 (information terminal 30) and the wireless communication unit 29 (receipt printer 20). As the wireless communication unit 37, any conventional communication device in compliance with the same specifications as wireless communication unit 29 can be used. In one or more embodiments, communication between the wireless communication unit 37 and the wireless communication unit 29 may be conducted through a device (repeater) (not shown). That is, the wireless communication unit 37 and the repeater wirelessly communicate with each other, and the repeater and the wireless communication unit 29 wirelessly communicate with each other, and thus communication can be realized between the wireless communication unit 37 and the wireless communication unit 29 via an intermediary device (repeater). Furthermore, communication between the wireless communication unit 37 and the wireless communication unit 29 may be provided through a plurality of repeaters. In one or more embodiments, communication among various the repeaters may be through wired communication.

The bus 38 connects the CPU 31, the ROM 32, the RAM 33, the auxiliary storage unit 34, the touch panel 35, and the NFC unit 36, and the wireless communication unit 37 to one another.

Next, operation of the accounting system 100 that is configured as described above will be described below, using an example of certain types of processing. Other types of processing may be used without departing from the scope of the invention.

In the registration device 10, registration processing relating to transactions is known. Furthermore, if a transaction is accompanied by payment, payment processing methods are known. Specifically, if the transaction is purchase and sale of merchandise, the registration device 10 registers the purchase merchandise and generates a list of purchased merchandise for the transaction. Then, after completion of the registration of purchased merchandise, the registration device 10 performs payment processing for the amount of payment tendered to purchase the merchandise included in the list. Here, the transaction of a purchase and sale of merchandise between a store and a shopper (customer) is provided as an example, but other types of transactions may similarly be performed via registration device 10.

When the payment is completed, the registration device 10 transmits receipt data including transaction details as strings of characters, and also requests (sends a printing request to) the receipt printer 20 to print a receipt.

The communication interface 27 of the receipt printer 20 receives the printing request.

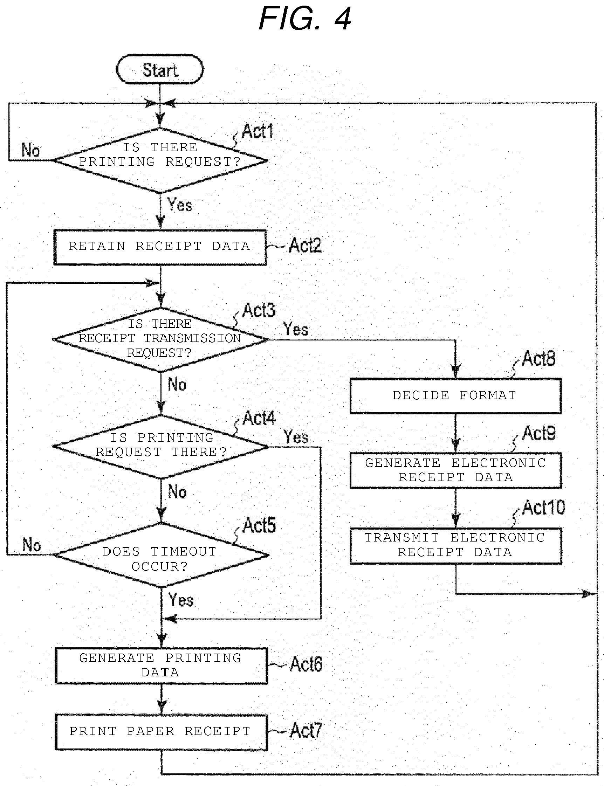

Fig. 4 is a flowchart of control processing which can be performed by the CPU 21.

In Act 1, the CPU 21 waits for a printing request from the registration device 10 (waiting state). Then, if the printing request is received by the communication interface 27, the CPU 21 determines that the result is YES, and proceeds to Act 2.

In Act 2, the CPU 21 causes the receipt data received by the communication interface 27 to be stored in the RAM 23 or the auxiliary storage unit 24. The receipt data includes the transaction details as strings of characters. Specifically, the receipt data may include, for example, a store name, a date, a time, a merchandise name, a price, a sub-total amount, a sales tax amount, a total amount, a tendered amount, a returned change amount, or the like. The format of the strings of characters that are included in the receipt data is arbitrary. The receipt data is often a set of character codes. However, the receipt data may also include, for example, image data, such as a store logo. As such, the CPU 21 performs the control processing based on the control program, and thus the computer, which includes the CPU 21, functions as an acquisition unit that acquires the receipt data including the transaction details using strings of characters.

In Act 3, the CPU 21 checks whether or not receipt transmission has been requested. Then, if the receipt transmission has not been requested, the CPU 21 determines that the result is No, and proceeds to Act 4.

In Act 4, the CPU 21 checks whether or not a print instruction has been provided. If the print instruction is not provided by a predetermined button operation (or the like) on the operation panel 25, the CPU 21 determines that the result is No, and proceeds to Act 5.

In Act 5, the CPU 21 checks whether or not a timeout has occurred. Specifically, if an elapsed time in the waiting state reaches a predetermined waiting time, the CPU 21 determines in Act 5 that a timeout has occurred. Then, if a timeout has not occurred yet, the CPU 21 returns to Act 3.

As such, in Act 3 to Act 5, the CPU 21 waits until receipt transmission is requested, the print instruction is provided, or a timeout occurs. If a timeout occurs in Act 5, the CPU 21 determines in Act 5 that a result is Yes. Then, the CPU 21 proceeds to Act 6.

In Act 3 to Act 5, the CPU 21 further determines a receipt type per the shopper's choice. The receipt type may be a paper receipt or an electronic receipt. As such, the CPU 21 performs the control processing that is based on the control program, and thus the computer comprises the CPU 21 functions as a first decision unit that determines the receipt type.

If the shopper chooses a paper receipt, an operator of the registration device 10 (e.g., a salesperson of the store) provides the print instruction by a predetermined button operation on the operation panel 25 and the like. In response, the CPU 21 determines in Act 4 that a result is Yes, and proceeds Act 6.

In Act 6, based on the receipt data, the CPU 21 generates the print data necessary for the printing unit 26 to print the strings of characters representing the transaction details on a sheet of receipt paper.

In Act 7, the CPU 21 sends the print data to the printing unit 26, and instructs the printing unit 26 to print a paper receipt. Specifically, the CPU 21 instructs the printing unit 26 to perform printing according to the print data generated in Act 6. Subsequently, the CPU 21 returns to the waiting state in Act 1. As such, the CPU 21 performs the control processing that is based on the control program, and thus the computer, which comprises the CPU 21, functions as a control unit (a printing control unit) that controls the printing unit 26 to print the receipt.

If the shopper chooses an electronic receipt, when the CPU 21 is in the waiting state in Act 3 to Act 5, the salesperson instructs the shopper to move the information terminal 30 in close proximity to the receipt printer 20 as indicated by the arrow in Fig. 1. Then, the NFC communication is available between the NFC unit 28 of the receipt printer 20 and the NFC unit 36 of the information terminal 30.

At this time, the shopper keeps the information terminal 30 in a state where the CPU 31 performs a next control processing. Alternatively, as the NFC communication can be performed between the NFC unit 28 and the NFC unit 36, the CPU 31 may automatically start processing a next control processing by running the operating system or firmware.

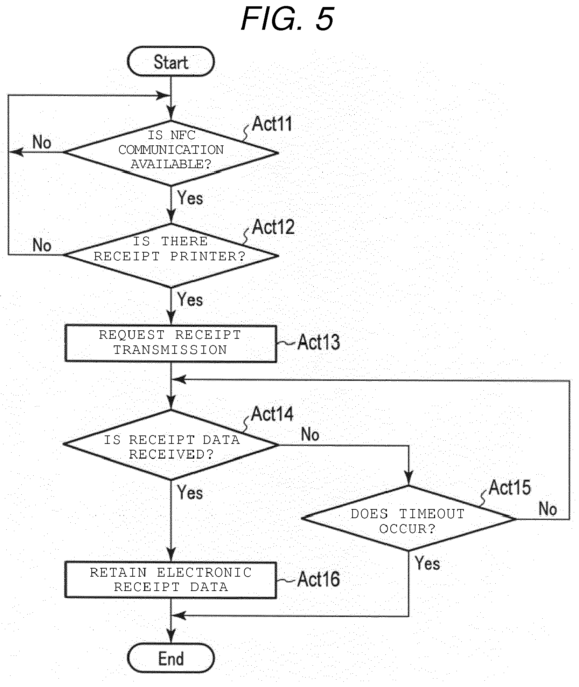

Fig. 5 is a flowchart of a control processing for reception of the electronic receipt by the CPU 31 of the information terminal 30.

In Act 11, the CPU 31 waits until NFC communication through the NFC unit 36 is available. Then, once the NFC communication is available, the CPU 31 determines that a result is Yes, and proceeds to Act 12.

In Act 12, the CPU 31 checks whether or not a communication partner for the NFC unit 36 is the receipt printer 20. If communication with the receipt printer 20 is not available, the CPU 31 returns to Act 11. As such, in Act 11 and Act 12, the CPU 12 waits until NFC communication with the receipt printer 20 is available. Then, if communication is available between the NFC unit 28 (receipt printer) and the NFC unit 36, the CPU 31 determines in Act 12 that a result is Yes, and proceeds to Act 13.

In Act 13, the CPU 31 makes a request to the receipt printer 20 for the receipt data through the NFC unit 36. Specifically, the CPU 31 generates a receipt request (receipt transmission request) including the identification information stored in the auxiliary storage unit 34, and instructs the NFC unit 36 to transmit the receipt request. The NFC unit 28 of the receipt printer 20 receives the receipt request.

At this time, the CPU 21 is in the waiting state of Act 3 to Act 5 in Fig. 4. Then, when the NFC unit 28 receives the receipt request, the CPU 21 determines in Act 3 that the result is Yes, and proceeds to Act 8.

In Act 8, based on the user information and the designation information included in the receipt request, the CPU 21 selects a format for the electronic receipt data to be transmitted to the information terminal 30. That is, the CPU 21 decides what format the electronic receipt data will have and whether or not to include additional data (e.g., user requested or user specific data according to user information in the receipt request). The format of the electronic receipt data can be decided by the CPU 21 as follows. The CPU 21 selects the data format designated in the receipt request. Based on user information that is included in the receipt request, the CPU 21 decides what if any additional data is to be included in the electronic receipt data. For example, if the user's birthday included in the user information is the same as the present day's date, the CPU 21 determines that additional data for the purpose of celebrating the birthday is to be included in the electronic receipt data. Additional data may include various pieces of information and be of various types, such as a dynamic image, a static image, a sound (e.g., audible voice message), or and text. As such, the CPU 21 performs the control processing based on the control program, and thus the computer, which includes the CPU 21, functions as a second decision unit that determines the format of the electronic receipt data.

In Act 9, the CPU 21 generates the electronic receipt data in the format selected in Act 8. That is, the CPU 21 converts the receipt data retained in the RAM 23 and the auxiliary storage unit 24 in Act 2, into the selected data format. If the receipt data retained in Act 2 is already in the data format selected in Act 8, the CPU 21 does not perform conversion. Then, if the additional data to be included in the electronic receipt data, the CPU 21 acquires the additional data. If the additional data is stored in the auxiliary storage unit 34, the CPU 21 reads the additional data from the auxiliary storage unit 34. Alternatively, if the additional data is stored in the registration device 10 without being stored in the auxiliary storage unit 34, the CPU 21 acquires the additional data from the registration device 10. Furthermore, alternatively, the CPU 21 may acquire the additional data from another apparatus (e.g., networked server) or devices that are not illustrated. Thereafter, the CPU 21 generates the electronic receipt data including the additional data. As such, the CPU 21 performs the control processing that is based on the control program, and thus the computer, which including the CPU 21, functions as a generation unit that generates the electronic receipt data.

In Act 10, the CPU 21 instructs the wireless communication unit 29 to transmit the generated electronic receipt data to the information terminal 30. In response, the wireless communication unit 29 transmits the electronic receipt data to the information terminal 30. As such, the CPU 21 performs the control processing that is based on the control program, and thus the computer functions as a transmission unit that wirelessly transmits the electronic receipt data including the transaction details to the information terminal 30, in cooperation between the computer, which includes the CPU 21, and the wireless communication unit 29. Furthermore, at this time, the computer which comprises the CPU 21 functions as a transmission control unit. Then, if the transmission is completed, the CPU 21 returns to the waiting state in Act 1.

In Act 13, the CPU 31 of the information terminal 30 requests the receipt transmission, and then proceeds to Act 14.

In Act 14, the CPU 31 checks whether or not the receipt data has been received by the wireless communication unit 37. Then, if the receipt data has not been received, the CPU 31 determines that a result is No, and proceeds to Act 15.

In Act 15, the CPU 31 checks whether or not a timeout has occurred. Specifically, if an elapsed time in the waiting state in Act 15 reaches a predetermined waiting time, the CPU 31 determines in Act 15 that a timeout has occurred. Then, if a timeout has not occurred, the CPU 31 returns to Act 14.

As such, in Act 14 and Act 15, the CPU 31 waits until the receipt data is received or a timeout occurs. If a timeout occurs in Act 15, the CPU 21 determines in Act 15 that a result is Yes. Then, the CPU 31 ends the processing illustrated in Fig. 5. At this time, the CPU 31 may notify the shopper that the electronic receipt data was not normally received.

In Act 14, if the electronic receipt data has been received, the CPU 31 determines in Act 14 that a result is Yes, and proceeds to Act 16.

In Act 16, the CPU 31 additionally retains the electronic receipt data, received by the wireless communication unit 37, in the auxiliary storage unit 34. Then, the CPU 31 ends the processing illustrated in Fig. 5.

As described above, the receipt printer 20 wirelessly transmits electronic receipt data to the information terminal 30. Thus, a dedicated electronic receipt server is not required as is considered the case with existing electronic receipt services, and an electronic receipt service can be provided more simply.

In addition, if the format of the electronic receipt data that can be transmitted by a receipt printer 20 is fixed, convenience of the electronic receipt service may not be great for certain users. However, if the receipt printer 20 can select the format for the electronic receipt data according to the each information terminal 30 that is a destination for the electronic receipt data, then the format of the electronic receipt data can be different for different information terminals 30 to improve convenience for a more users. Thus, according to an embodiment, it is possible to provide electronic receipt data to a user of an electronic receipt service in a format selected in accordance with the needs or preferences of the provider or the user.

The need or preference of the user may be, for example, a data format suitable for an application such as household account book software.

In addition, the data format may vary in time. Specifically, the customer chooses a data format for one transaction and another format for another transaction on the information terminal 30. Subsequently, the receipt printer 20 receives the desired data format and transmits the electronic receipt data in the desired format to the information terminal 30 for each transaction.

Furthermore, the receipt printer 20 includes the additional data in the electronic receipt data. Accordingly, in addition to the transaction details, various pieces of data, such as a moving image, voice, an image, and text can be provided to the customer.

According to the embodiment described above, the additional information is based on the user information (identification information). In some embodiments, the additional data may be data specific to merchandise a customer purchases. The additional data may be an advertisement.

In some embodiments, the electronic receipt data including transaction details and additional data may be may be transmitted to two parts, through the NFC unit 28 and the wireless communication unit 29, respectively, to the information terminal 30. For example, the NFC unit 28 may transmit the transaction details, and the wireless communication unit 29 transmits the additional data.

It is also possible that a merchandise sales data processing apparatus that is equipped with both a function of the registration device 10 and a function of the receipt printer 20 is provided.

In some embodiments, identification information is wirelessly transmitted through the NFC communication method, and the electronic receipt is wirelessly transmitted through Wi-Fi or Bluetooth communication methods. Wi-Fi or Bluetooth wireless communications provide higher data communication speed, and thus suitable for a larger amount of electronic receipt data.

In some embodiments, any other wireless communication methods other than NFC communication method may be used for the communication between the receipt printer 20 and the information terminal 30.

In some embodiments, a NFC unit 28 or 36, or an antenna may be externally attached to the receipt printer 20 or the information terminal 30 without being embedded therein.

In some embodiments, a wireless communication unit 29 or 37, or an antenna may be externally attached to the receipt printer 20 or the information terminal 30 without being embedded therein.

In some embodiments, the CPU 21 may perform Act 6 and Act 7 simultaneously, and Act 8 to Act 10 simultaneously, and may provide instructions to print the paper receipt and transmit the electronic receipt data.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A receipt printing apparatus, comprising:
a printer including a processor and a printing unit that is capable of printing on a printing medium; and
a registration device connected to the printer, wherein
the printer stores a control program that when implemented by the processor causes the printer to:
acquire transaction details from the registration device;
receive a selection of a first output receipt type and a second output receipt type; and
output the transaction details in the selected one of the first output receipt type and the second output receipt type.

2. The receipt printing apparatus according to claim 1, wherein
the first output receipt type is a printed receipt, and the second output receipt type is an electronic receipt.

3. The receipt printing apparatus according to claim 1 or 2, wherein the selection is provided by one of external information terminals, a button operation on the printer, or a default setting of in the control program implemented when no specific selection is received from the external information terminal or the button operation.

4. The receipt printing apparatus according to any one of claims 1 to 3, further comprising:
a first wireless communication unit that is capable of wirelessly receiving identification information from one of external information terminals and transmitting the electronic receipt to the external information terminal using a first wireless communication protocol.

5. The receipt printing apparatus according to claim 4, further comprising:
a second wireless communication unit that is capable of wirelessly receiving identification information from the external information terminal and transmitting the electronic receipt to the external information terminal using a second wireless communication protocol that is different than the first wireless communication protocol.

6. The receipt printing apparatus according to claim 4 or 5, wherein the first wireless communication protocol is a near field communication method.

7. The receipt printing apparatus according to any one of claims 4 to 6, wherein
the identification information received from the external information terminal includes a user specification for a format of the electronic receipt, and
the electronic receipt is output in the format according to the user specification.

8. A receipt printer for a point-of-sale terminal, the receipt printer comprising:
a processor and a memory unit;
a printer unit capable of printing paper a receipt including transactions details supplied by a point-of-sale terminal;
a near-field communication unit capable of wirelessly transmitting information to an external information terminal and wirelessly receiving information from the external information terminal, wherein the memory unit stores a control program that, when implemented by the processor, causes:
an acquisition of transaction details from the point-of-sale terminal via a communication interface connected to the point-of-sale terminal,
a waiting for a selection of a receipt output type for a predetermined time period, and
an output of the transaction details as one of a printed receipt, printed by the printing unit, and an electronic receipt, wirelessly transmitted to the external information terminal, according to the selection of the receipt output type.

9. The receipt printer according to claim 8, further comprising:
a wireless communication unit, wherein
the electronic receipt is transmitted to the external information terminal via the wireless communication unit.

10. The receipt printer according to claim 8 or 9, further comprising:
an operation panel for providing the selection of the receipt output type.

11. The receipt printer according to any one of claims 8 to 10, wherein the information transmitted from the external information terminal includes a user-selected format for the electronic receipt and user-specific information of a user associated with the external information terminal, and the program, when implemented by the processor, further causes:
the electronic receipt to be output in the user-selected format, and
the electronic receipt to include additional information according to the user-specific information.

12. A non-transitory computer readable medium storing a control program that, when implemented by a processor in a receipt printer, causes:
an acquisition of transaction details from a point-of-sale terminal via a communication interface of the receipt printer connected to the point-of-sale terminal;
a waiting for a selection of a receipt output type for a predetermined time period; and
an output of the transaction details as one of a printed receipt, printed by a printing unit of the receipt printer, and an electronic receipt, transmitted to an external information terminal, according to the selection of the receipt output type.

13. The non-transitory computer readable medium according to claim 12, wherein
the electronic receipt is transmitted to the external information terminal via a wireless communication unit of the receipt printer.

14. The non-transitory computer readable medium according to claim 12 or 13, the control program further causing:
the electronic receipt to be output in a user-selected format if information received from the external information terminal includes the user-selected format.

15. The non-transitory computer readable medium according to any one of claims 12 to 14, wherein the selection of the receipt output type is made by near field communication between the external information terminal and the receipt printer.
